# FASCICULE DE BREVET EUROPEEN

(11) **EP 3 050 188 B1**
(45) Date de publication et mention de la délivrance du brevet: **01.08.2018**
(21) Numéro de dépôt: 14784321.3
(22) Date de dépôt: 22.09.2014
(51) Int. Cl.: H02J 3/14, H02J 13/00

(54) **GESTION DE COMMANDES D'UN EQUIPEMENT ELECTRIQUE APTE A ETRE COMMANDE PAR DES SIGNAUX DE COMMANDE INFRAROUGES**
KOORDINATION DER STEUERUNG EINES ELEKTRISCHEN GERÄTES DURCH INFRAROTKONTROLLSIGNALE
MANAGING THE CONTROL OF AN ELECTRICAL DEVICE CONTROLLABLE BY INFRARED CONTROL SIGNALS

(30) Priorité: 24.09.2013 FR 1359157
(43) Date de publication de la demande: 03.08.2016
(73) Titulaire: Voltalis SA, 75008 Paris (FR)
(72) Inventeur: BINEAU, Mathieu, F-Versailles 78000 (FR); CREN, Pierre, F-92130 Issy les Moulineaux (FR); DUBREUIL, Christophe, F-31000 Toulouse (FR); HEINTZ, Bruno, F-75015 Paris (FR); LEFEBVRE DE SAINT GERMAIN, Hugues, Hong Kong (CN); OURY, Jean-Marc, F-75007 Paris (FR)
(74) Mandataire: Hervouet-Malbec, Sylvie
(86) Numéro de dépôt international: PCT/FR2014/052349
(87) Numéro de publication internationale: WO 2015/044570

(56) Documents cités:
- FR-A1- 2 904 486
- US-A1- 2012 109 395
- US-A1- 2012 242 526
- US-A1- 2013 183 042

## Description

La présente invention concerne de manière générale le domaine des équipements électriques aptes à être commandés à distance par une télécommande à infrarouge, et plus particulièrement la gestion des commandes pour de tels équipements électriques.

Les coûts actuels de l'énergie imposent une gestion fine et contrôlée de la consommation électrique. Cette gestion est nécessaire aussi bien à l'échelle des équipements électriques eux-mêmes que dans les réseaux électriques qui les alimentent. La régulation de la consommation sur la grille électrique à l'échelle d'une région ou d'un pays peut inclure des actions à l'échelle locale, par exemple sur une pluralité de domiciles.

Les systèmes de gestion de la consommation énergétique existant prennent des formes diverses. Du plus simple thermostat de chauffage électrique domestique aux gestions centralisées d'immeubles entiers, ces systèmes permettent de contrôler l'alimentation des équipements électriques en fonction de consignes reçues. De manière générale, on connaît du document US 2012 01 09 695 une interface permettant de contrôler plusieurs équipements. En particulier, la Demanderesse a déjà proposé un procédé de gestion et de modulation en temps réel d'une consommation électrique dans le brevet français publié sous le numéro FR 2 904 486. Ce procédé permet, d'une part, d'analyser la consommation électrique d'une pluralité d'utilisateurs finaux, et de la comparer à la production d'énergie disponible sur le réseau à chaque instant. Ce procédé permet, d'autre part, d'établir en continu un profil de consommation individuel de chaque consommateur pour en déduire une prévision individuelle de sa consommation et les capacités disponibles. Ce procédé permet, enfin, de moduler sélectivement l'alimentation de certains équipements électriques chez ces utilisateurs finaux.

La modulation de l'alimentation couplée à l'analyse de la consommation d'un grand nombre d'utilisateurs permet d'adapter la consommation électrique à la production disponible à un instant donné. En d'autres termes, au lieu par exemple d'augmenter la production énergétique en cas de demande supérieure aux moyens de production dont la mobilisation était prévue, il devient possible de contrebalancer cette augmentation en diminuant la consommation en de très nombreux points de consommation du réseau. On parle alors d'« effacement diffus ». L'effacement diffus permet par exemple de minimiser les variations brusques de besoins énergétiques (par exemple en début de soirée en hiver), afin de limiter les conséquences financières de ces pics de consommation. En effet, ceux-ci sont habituellement compensés par la mise en fonctionnement d'équipements de production inactifs, très chers et souvent polluants.

Ce procédé de gestion a fait ces preuves. Néanmoins, certains équipements à commande par infrarouge, comme les climatiseurs par exemple, sont complexes à intégrer. A titre d'exemple, un ordre de coupure d'alimentation électrique ou de réduction de consommation envoyé à ce type d'équipements dans le cadre du procédé de gestion a pour conséquence de réinitialiser les paramètres de fonctionnement de l'équipement, ce qui risque de poser des problèmes au moment de son redémarrage.

Par ailleurs, dans le domaine de la gestion des équipements commandés par infrarouge dans le cadre d'un réseau domotique, il a déjà été proposé de remplacer les télécommandes à infrarouge classiques, livrées avec les équipements concernés, par une télécommande universelle. L'intégration de certains équipements, comme les climatiseurs, aux réseaux domotiques via des télécommandes universelles reste néanmoins complexe, sinon impossible aujourd'hui. En effet, il existe un grand nombre de commandes infrarouges pour chaque équipement, mais il n'existe pas, à ce jour, de standard les concernant. Le nombre élevé de constructeurs et la multiplicité des modèles de climatiseurs engendrent un certain nombre de problèmes. En particulier:
- une télécommande universelle étant prévue pour se substituer à la télécommande initiale, il est rare que son ergonomie et son affichage soient adaptés à l'ensemble des équipements qu'elle est censée pouvoir piloter;
- du fait du très grand nombre de jeux de commandes infrarouges, comme expliqué plus haut, il est fréquent que des commandes spécifiques, comme la variation de vitesse, la déshumidification ou la purification de l'air dans le cas d'un climatiseur, ne soient pas supportées par les télécommandes universelles.

L'invention a pour but de pallier les inconvénients des systèmes connus.

À cet effet, la présente invention a pour objet un appareil de gestion de commandes d'un équipement électrique, ledit équipement électrique étant apte à être commandé par des signaux de commande infrarouges issus d'une télécommande à infrarouge associée à l'équipement électrique, ledit appareil de gestion de commandes comportant un récepteur à infrarouge, un émetteur à infrarouge et un module d'interface apte à recevoir des signaux de commande émis par un système de gestion tiers, ledit appareil de gestion de commandes étant apte à être placé en regard d'un module de réception à infrarouge de l'équipement électrique de façon à recevoir sur le récepteur à infrarouge tout signal de commande infrarouge issu de ladite télécommande et empêcher tout signal de commande infrarouge issu de ladite télécommande à infrarouge d'atteindre directement le module de réception à infrarouge, et comportant un contrôleur apte à commander la transmission vers l'équipement électrique, par l'intermédiaire de l'émetteur à infrarouge, de signaux de commande à infrarouge générés à partir des signaux de commande à infrarouge reçus par le récepteur à infrarouge ou des signaux de commande reçus par le module d'interface, en fonction d'un ensemble de règles de compatibilité et/ou de priorité relatives à l'exécution des signaux de commande reçus.

On peut ainsi choisir de transmettre tel quel un signal de commande reçu par l'appareil de gestion, ou choisir de l'ignorer, éventuellement temporairement, ou encore de créer un nouveau signal de commande issu de l'application des règles de compatibilité et/ou de priorité.

Selon d'autres options, particulièrement avantageuses
- le module d'interface peut être apte à permettre l'envoi de données vers le système de gestion tiers.
- le module d'interface peut être apte à permettre des échanges de signaux de type CPL, et/ou radiofréquence, notamment WiFi, et/ou ZigBee, et/ou GPRS/3G/4G
- le module d'interface et le récepteur à infrarouge peuvent être confondus.
- l'appareil de gestion de commandes peut comprendre en outre une alimentation de secours.
- l'appareil de gestion de commandes peut comprendre en outre des moyens d'interface homme-machine tels qu'un indicateur visuel, et/ou un écran d'affichage, et/ou un clavier comportant au moins un bouton.
- l'appareil de gestion de commandes peut comprendre en outre un module d'interface série de type USB, RS232, Firewire, Thunderbolt, HDMI, KNX, RJ45, RJ12 ou BacNet.
- l'appareil de gestion de commandes peut être en outre apte à mettre à jour l'ensemble de règles de compatibilité et/ou de priorité sur réception d'informations de mises à jour sur le module d'interface, et/ou sur le module d'interface série.
- l'appareil de gestion de commandes peut comporter en outre une mémoire apte à conserver un historique de la mise en oeuvre du jeu de règles, notamment les signaux de commande transmis ou non à l'équipement électrique.
- la mémoire peut être en outre apte à conserver toute donnée susceptible d'être reçue par l'appareil en provenance du système de gestion tiers et/ou de l'équipement électrique et/ou de la télécommande à infrarouge.

La présente invention a également pour objet un procédé de gestion de commandes d'un équipement électrique apte à être commandé par des signaux de commande infrarouges issus d'une télécommande à infrarouge associée à l'équipement électrique, le procédé comprenant les étapes suivantes :
- intercepter, au moyen d'un appareil de gestion de commandes comportant un récepteur à infrarouge, tout signal de commande infrarouge issu de ladite télécommande à infrarouge ;
- recevoir, sur un module d'interface de l'appareil de gestion de commandes, des signaux de commande émis par un système de gestion tiers ; et
- transmettre vers l'équipement électrique, par l'intermédiaire d'un émetteur à infrarouge de l'appareil de gestion de commandes, des signaux de commande à infrarouge générés à partir des signaux de commande à infrarouge reçus par le récepteur à infrarouge ou des signaux de commande reçus par le module d'interface, en fonction d'un ensemble de règles de compatibilité et/ou de priorité relatives à l'exécution des signaux de commande reçus.

Pour tout signal de commande reçu, l'étape de transmission comprend de préférence les étapes de :
- vérification de l'existence d'une exécution déjà en cours ou programmée correspondant à un autre signal de commande reçu antérieurement;
- le cas échéant, vérification de la compatibilité d'une exécution de la commande reçue avec une exécution déjà en cours ou programmée correspondant à l'autre signal de commande reçu antérieurement selon ledit ensemble de règles;
- en cas d'incompatibilité, vérification de la priorité à donner à l'exécution de la commande reçue ou à l'exécution déjà en cours ou programmée selon ledit ensemble de règles.

Dans un mode de réalisation possible, tout signal de commande reçu alors qu'il n'existe aucune autre exécution en cours ou programmée, ou tout signal de commande reçu dont l'exécution est jugée compatible avec une autre exécution en cours ou programmée, ou tout signal de commande reçu dont l'exécution est jugée incompatible mais prioritaire par rapport à une autre exécution en cours ou programmée est transmis par l'émetteur à infrarouge de l'appareil de gestion de commandes.

Tout signal de commande reçu dont l'exécution est jugée incompatible et non prioritaire par rapport à une autre exécution en cours ou programmée est de préférence stocké en vue d'une possible exécution ultérieure selon le jeu de règle de compatibilité et/ou de priorité.

La présente invention a également pour objet l'utilisation de l'appareil de gestion de commandes dans un système de gestion de commandes dans lequel le système de gestion tiers est un système de gestion et de modulation en temps réel d'une consommation électrique comprenant un boîtier pilote relié à une plateforme centralisée, les signaux de commande émis par le système de gestion tiers comprenant notamment des ordres de coupure ou de réduction de consommation de l'équipement électrique.

L'invention ainsi que ses avantages particuliers seront mieux compris au vu de la description suivante, faite en référence aux figures annexées dans lesquelles:
- la figure 1 représente schématiquement un système de gestion de commandes d'un équipement électrique apte à être commandé par signaux infrarouge, conforme à l'invention;
- la figure 2 donne, sous forme simplifiée, un mode de réalisation possible d'un appareil de gestion de commandes conforme à la présente invention;
- la figure 3 illustre un exemple des différentes étapes susceptibles d'être mises en oeuvre par l'appareil de gestion de commandes de la figure 2.

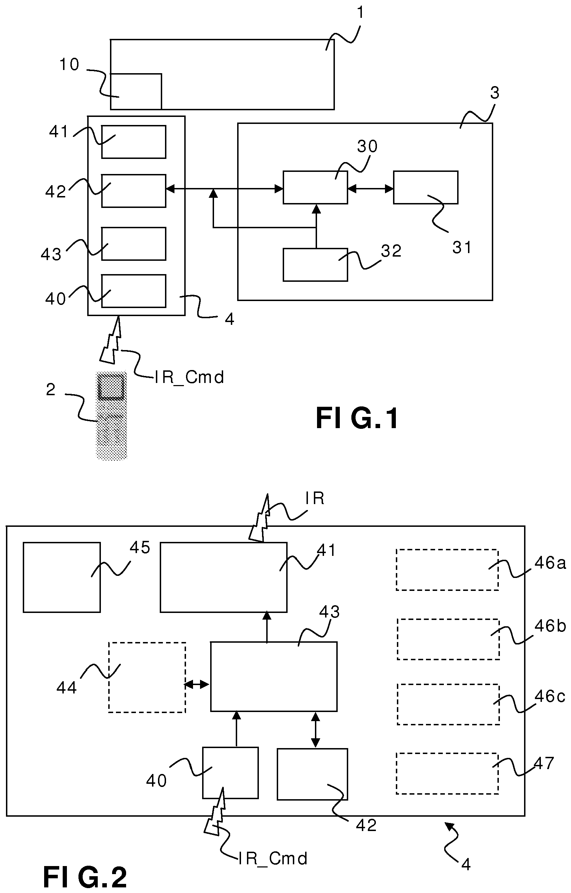

La figure 1 représente sous forme schématique une architecture de système permettant la gestion de la commande d'un équipement électrique 1 apte à être commandé par signaux infrarouges, à titre d'exemple non limitatif, d'un climatiseur, installé chez un particulier ou dans une entreprise.

L'équipement électrique 1 comporte classiquement un module 10 de réception de signaux infrarouges apte à recevoir des signaux de commande infrarouges, tels que des signaux IR_Cmd générés par une télécommande 2 à infrarouge classique, livrée avec l'équipement électrique 1. Conformément à l'invention, on souhaite pouvoir intégrer cet équipement électrique 1 et sa télécommande associée dans un système de gestion de commandes plus global qui doit permettre:
- d'une part, à l'utilisateur détenteur de l'équipement électrique 1 de commander l'équipement en utilisant sa télécommande 2 à infrarouge classique;
- d'autre part, à un système 3 de gestion tiers, de commander également l'équipement électrique 1.

Par système 3 de gestion tiers, on entend tout système autre que la gestion classique par couple équipement/télécommande. Ainsi, le système 3 de gestion tiers peut être un système de gestion et de modulation en temps réel d'une consommation électrique implémentant le procédé suscité, et comportant par exemple, comme illustré sur la figure 1, un boîtier pilote 30 relié à une plateforme centralisée 31, par exemple un serveur Internet, et un ou plusieurs capteurs 32 disposés chez l'utilisateur, pour mesurer des paramètres environnementaux locaux tels que la température, la luminosité, la présence de personnes...

Dans ce cas, le boîtier pilote 30 peut être soit un boîtier installé chez l'utilisateur, et relié à un ou plusieurs équipements électriques dont l'équipement électrique 1, soit un boîtier géographiquement proche du bâtiment dans lequel est installé l'équipement électrique 1. Pour un tel système de gestion et de modulation en temps réel de la consommation électrique, les commandes issues du système de gestion tiers vont consister essentiellement en des commandes d'effacement de consommation, mais peuvent également correspondre à une gestion personnalisée par l'utilisateur via la plateforme centralisée 31, comme par exemple une programmation d'une mise en route du climatiseur à un instant donné, pour une période donnée, et/ou selon une température de consigne donnée.

En variante, le système 3 de gestion tiers peut être tout système domotique ou tout système de gestion technique de bâtiment, local ou non, permettant de gérer notamment le fonctionnement de l'équipement électrique 1 en fonction de paramètres inscrits dans un profil utilisateur (plages horaires, température...). Ici encore, un serveur centralisé du système de gestion tiers peut avantageusement permettre à l'utilisateur d'effectuer des programmations à distance de son équipement.

Dans tous les cas, le système comporte en outre, conformément à l'invention, un appareil 4 de gestion de commandes qui va servir d'intermédiaire entre, d'une part, l'ensemble formé par la télécommande 2 à infrarouge classique et l'équipement électrique 1, et d'autre part, l'ensemble formé par le système 3 de gestion tiers et l'équipement électrique 1. Plus spécifiquement, l'appareil 4 de gestion de commandes est apte à être placé en regard du module 10 de réception de signaux infrarouges de façon à empêcher tout signal de commande IR_Cmd généré par la télécommande 2 à infrarouge classique d'arriver directement sur le module 10 de réception de signaux infrarouges.

Un tel signal de commande IR_Cmd est en fait d'abord reçu par un récepteur 40 à infrarouge de l'appareil 4, en lieu et place du module 10 de réception de signaux infrarouges, avant d'être éventuellement transmis par un émetteur 41 à infrarouge de l'appareil 4 à destination du module 10 de réception de signaux infrarouges en fonction du respect de règles de compatibilité et/ou de priorités prédéfinies, appliquées par un contrôleur 43.

Dans les faits, l'appareil 4 de gestion de commandes est donc monté en regard du module 10 de réception de signaux infrarouges de l'équipement électrique 1, de sorte à venir jouer un rôle de bouclier infrarouge vis-à-vis de la télécommande 2. Cela peut être assuré en prévoyant que l'émetteur 41 à infrarouge possède une surface suffisamment étendue pour venir recouvrir la totalité de la surface du module 10 de réception de signaux infrarouges. La pose de l'appareil 4 de commande sur l'équipement électrique 1 peut être réalisée par collage, ou par l'utilisation de rubans adhésifs optionnellement transparents, par l'utilisation d'un système de fixation magnétique, par fixation par clipsage, ou encore une combinaison de ces méthodes.

En outre, l'appareil 4 de gestion de commandes comporte également un module 42 d'interface apte à recevoir notamment des signaux de commande Tiers_Cmd en provenance du système 3 de gestion tiers, par exemple du boîtier pilote 30. La connexion entre le module 42 d'interface et le système 3 de gestion tiers pouvant être filaire ou sans fil, le module 42 d'interface est apte, selon les cas à permettre l'échange de signaux de type CPL, radiofréquence, notamment WiFi, ZigBee, et/ou GPRS/3G/4G, ou même infrarouge. Dans ce dernier cas, le module 42 d'interface et le récepteur 40 peuvent ne faire qu'un.

Le module 42 d'interface est de préférence également apte à permettre l'envoi de données vers le système 3 de gestion tiers.

Là encore, un signal de commande Tiers_Cmd reçu par le module 42 d'interface ne sera transmis par l'émetteur 41 à infrarouge de l'appareil 4 à destination du module 10 de réception de signaux infrarouges qu'en fonction du respect de règles de compatibilité et/ou de priorités prédéfinies.

La figure 2 illustre avec plus de détails un mode de réalisation possible pour un appareil 4 de gestion de commandes selon l'invention. Sur cette figure, les éléments représentés en pointillés sont considérés comme optionnels, et pourront être omis et/ou remplacés selon les variantes de réalisation. On retrouve sur cette figure 2 les éléments déjà décrits en référence à la figure 1, en particulier:
- le récepteur 40 à infrarouge apte à recevoir des signaux infrarouges, notamment les signaux de commande IR_Cmd émis par la télécommande 2 associée à l'équipement électrique 1;
- le module 42 d'interface apte à recevoir des signaux de commande Tiers_Cmd émis par le système 3 de gestion tiers;
- le contrôleur 43 apte à commander la transmission vers l'équipement électrique des signaux de commande à infrarouge reçus par le récepteur à infrarouge 40 ou des signaux de commande reçus par le module 42 d'interface en fonction d'un ensemble de règles de comptabilité et /ou de priorité ; et
- l'émetteur 41 à infrarouge apte à émettre des signaux de commande infrarouge à destination du module 10 de réception de signaux infrarouges de l'équipement électrique 1, suite à la réception et au traitement des commandes générées par la télécommande 2 et/ou par le système 3 de gestion tiers, sous réserve des compatibilités et des priorités.

Sur l'exemple de la figure 2, qui illustre un mode de réalisation possible, l'appareil 4 de gestion de commandes comprend en outre une mémoire 44, une alimentation 45 individuelle, et des moyens d'interface homme-machine tels qu'un indicateur visuel 46a, un écran d'affichage 46b et un clavier 46c, et un module 47 d'interface série, par exemple de type USB.

L'alimentation 45 individuelle peut être reliée soit à l'alimentation de l'équipement électrique 1 à commander, soit au même réseau électrique que celui qui alimente cet équipement électrique 1. En variante, l'appareil 4 de gestion de commandes peut également être connecté par le module 47 d'interface série au système 3 de gestion tiers et être alimenté par USB. Enfin, l'appareil 4 de gestion de commandes peut comprendre une alimentation de secours, comme une pile (non représentée), pour assurer l'alimentation en cas de perte de source de courant.

L'indicateur visuel 46a permet de montrer à un utilisateur que l'appareil 4 de gestion de commandes reçoit bien les commandes infrarouges de la télécommande 2, à l'instar de ce qui est classiquement fait pour les télécommandes des télévisions. Il peut en outre être utilisé pour indiquer la bonne marche de l'appareil 4 de gestion de commandes, et/ou qu'une action en provenance du système 3 de gestion tiers est en cours, et/ou qu'une erreur a été détectée, etc. Cet indicateur visuel 46a peut être réalisé au moyen d'une diode électroluminescente ou de tout autre moyen de signalisation visuelle adapté.

L'écran d'affichage 46b peut être utilisé pour afficher une représentation textuelle ou symbolique d'une commande transmise à l'équipement électrique 1, et/ou d'un mode ou d'un état de fonctionnement du système 3 de gestion tiers (notamment dans le cas d'un réseau domotique), et/ou servir à l'affichage d'un état de l'appareil 4 de gestion de commandes, ainsi que toute autre information utile. Cela peut permettre en particulier à l'utilisateur de l'équipement électrique 1 d'être informé de l'état de fonctionnement de l'appareil 4 de gestion de commandes, et également comprendre la raison pour laquelle, dans certaines situations, une commande IR_Cmd issue de la télécommande 2 n'est pas exécutée par l'équipement électrique 1.

Le clavier 46c, qui peut être réduit à un seul bouton, peut être utilisé pour configurer localement l'appareil 4, par exemple pour saisir des plages horaires, et/ou pour modifier les règles de compatibilité et/ou de priorités, voire pour forcer l'exécution d'une commande considérée normalement comme non prioritaire.

Le module 47 d'interface série peut être de tout type, comme par exemple de type USB, RS232, Firewire, Thunderbolt, HDMI, KNX, RJ45, RJ12 ou BacNet.

En opération, l'appareil 4 de gestion de commandes est susceptible, comme on l'a vu précédemment, de recevoir des signaux de commande IR_Cmd au niveau du récepteur 40 à infrarouge, ces signaux de commande IR_Cmd étant générés par la télécommande 2, et des signaux de commande Tiers_Cmd au niveau du module 42 d'interface, ces signaux de commande Tiers_Cmd étant générés par le système 3 de gestion tiers.

Sur réception de l'un quelconque de ces signaux de commande, le contrôleur 43, qui peut utilement contenir une horloge, va analyser ce signal de commande de manière à vérifier en particulier:
- s'il existe une exécution déjà en cours ou programmée correspondant à un autre signal de commande reçu antérieurement;
- le cas échéant, si l'exécution de la commande reçue n'est pas incompatible avec une exécution déjà en cours ou programmée correspondant à l'autre signal de commande reçu antérieurement;
- en cas d'incompatibilité, si l'exécution de la commande reçue est ou non prioritaire par rapport à l'exécution déjà en cours ou programmée.

Pour ce faire, l'appareil 4 de gestion de commandes dispose au moins d'un ensemble de règles de compatibilité et/ou de priorité. Il convient de noter qu'on peut envisager de ne vérifier que la compatibilité ou la priorité des commandes.

L'ensemble de règles de compatibilité et/ou de priorité dépend bien entendu de l'application envisagée, tant au niveau du système de gestion tiers que de l'équipement électrique à commander. On peut notamment imposer que toutes les commandes issues du système de gestion tiers soient toujours prioritaires par rapport aux commandes issues de la télécommande, ou l'inverse. On peut également, selon la nature des commandes, prévoir que certaines commandes issues de la télécommande soient prioritaires par rapport à certaines commandes issues du système de gestion tiers.

Tout signal de commande reçu alors qu'il n'existe aucune autre exécution en cours ou programmée, ou tout signal de commande reçu dont l'exécution est jugée compatible avec une autre exécution en cours ou programmée, ou tout signal de commande reçu dont l'exécution est jugée incompatible mais prioritaire par rapport à une autre exécution en cours ou programmée, est transmis par l'émetteur 41 à infrarouge de l'appareil 4 de gestion de commandes.

Tout signal de commande reçu dont l'exécution est jugée incompatible et non prioritaire par rapport à une autre exécution en cours ou programmée est de préférence stocké en vue d'une possible exécution ultérieure selon le jeu de règles de compatibilité et/ou de priorité.

L'historique de la mise en oeuvre des règles, notamment une copie du signal transmis à l'équipement électrique 1, peut avantageusement être également envoyé au système 3 de gestion tiers, via le module 42 d'interface, et/ou être conservé dans la mémoire 44 pour une application future du jeu de règles.

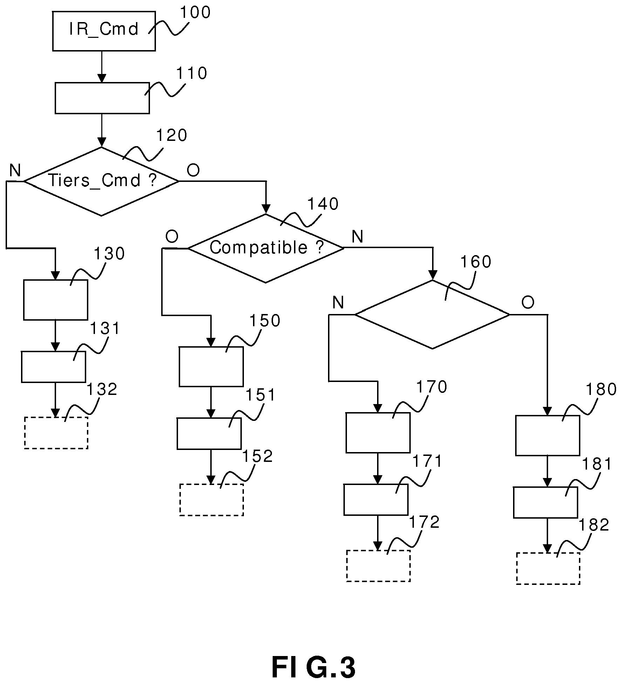

La figure 3 représente un exemple des différentes étapes susceptibles d'être mises en oeuvre par l'appareil de gestion de commandes de la figure 2. Dans cet exemple non limitatif, on a supposé que l'équipement électrique 1 à commander est un climatiseur, et que le système 3 de gestion tiers est un système de gestion et de modulation de la consommation électrique de l'installation électrique comprenant en particulier l'équipement 1. Le principe de fonctionnement de l'ensemble de règles est dans ce cas que les commandes reçues du système 3 de gestion tiers sont généralement prioritaires. En effet, ces commandes permettent de réaliser l'effacement diffus, et leur exécution est donc indispensable. Et même dans le cas d'un autre type de système de gestion tiers, tel qu'un réseau domotique plus simpliste, il est souvent préférable que les commandes issues de la télécommande 2 ne soient pas prioritaires.

Le procédé débute ici par la réception d'un signal de commande infrarouge IR_CMD issu de la télécommande 2, au niveau du récepteur 40 dans une étape 100. Le signal de commande reçu est stocké dans la mémoire 44 à laquelle a accès le contrôleur 43 (étape 110). Ce dernier réalise alors un test (étape 120) pour déterminer si une commande Tiers_CMD issue du système de gestion tiers est déjà en cours d'exécution, ou si son exécution est programmée.

Lorsqu'il n'existe aucune exécution en cours ou programmée correspondant à une commande Tiers_CMD, l'appareil 4 agit alors comme un simple transmetteur de la télécommande 2. Pour cela, le contrôleur 43 stocke dans la mémoire 44 le résultat de l'application des règles de compatibilité et/ou de priorités, typiquement le signal de commande IR_CMD qui va être transmis, et éventuellement des données indicatives de l'état dans lequel se trouvera l'équipement électrique 1 après l'exécution de la commande IR_CMD (étape 130), puis commande l'émetteur 41 pour qu'il émette (étape 131) une réplique de la commande IR_CMD. A noter que l'émission de la réplique n'est pas forcément immédiate mais peut être différée selon la nature de la commande. Cette réplique est également de préférence transmise au système 3 de gestion tiers, par exemple au boîtier pilote 30, via le module 42 d'interface (étape 132).

Si, à l'inverse, il résulte du test effectué à l'étape 120, qu'une commande Tiers_CMD est en cours d'exécution ou programmée, le contrôleur 43 détermine la compatibilité entre l'exécution des deux commandes Tiers_CMD et IR_Cmd (étape 140). Cela peut être réalisé par l'exécution d'une fonction Comp() qui reçoit comme arguments la commande IR_CMD et la commande Tiers_CMD. La fonction Comp() peut être réalisée de diverses manières. Par exemple, la mémoire 44 peut contenir pour l'ensemble des équipements électriques 1 que l'appareil 4 est susceptible de commander un tableau du type table de vérité qui indique pour chaque couple (Tiers_CMD, IR_CMD) une valeur de compatibilité. Par exemple, cette valeur de compatibilité peut être du type 0 ou 1 et servir directement de sortie à la fonction Comp(). D'autres modes de réalisation peuvent également être prévus pour la fonction Comp().

A titre d'exemple, si l'utilisateur souhaite commander le climatiseur par la télécommande pour que la température ambiante soit de 19 degrés alors que la température ambiante est de 21 degrés et qu'une commande d'effacement est déjà en cours d'exécution, ou doit très prochainement être exécutée, les commandes devront être jugées incompatibles.

Lorsque le test effectué à l'étape 140 détermine que les deux commandes sont compatibles, l'appareil 4 agit ici encore comme un simple transmetteur de la télécommande 2: le contrôleur 43 stocke dans la mémoire 44 le résultat de l'application des règles de compatibilité et/ou de priorités, typiquement le signal de commande IR_CMD qui va être transmis, et éventuellement des données indicatives de l'état dans lequel se trouvera l'équipement électrique 1 après l'exécution de la commande IR_CMD (étape 150), puis commande l'émetteur 41 pour qu'il émette (étape 151) une réplique de la commande IR_CMD. La réplique est de préférence transmise au système 3 de gestion tiers, par exemple au boîtier pilote 30, via le module 42 d'interface (étape 152).

Si, à l'inverse, il résulte du test effectué à l'étape 140, que les deux commandes sont incompatibles, un second test est effectué (étape 160) pour vérifier si l'exécution de la commande reçue est prioritaire par rapport à l'exécution d'une commande déjà en cours ou programmée selon ledit ensemble de règles.

Lorsque le test effectué à l'étape 160 détermine que l'exécution de la commande reçue IR_Cmd n'est pas prioritaire, cette commande IR_Cmd est stockée dans la mémoire 44 (étape 170), en attente de l'accomplissement de l'exécution de la commande Tiers_Cmd. Pour lancer l'exécution de la commande Tiers_Cmd, le contrôleur 43 commande l'émetteur 41 pour qu'il émette (étape 171) une réplique de cette commande Tiers_Cmd. La réplique est de préférence transmise au système 3 de gestion tiers, par exemple au boîtier pilote 30, via le module 42 d'interface et/ou stockée dans la mémoire 44 (étape 172). Dès que la commande IR_Cmd ne sera plus jugée incompatible, ou après l'accomplissement de l'exécution de la commande Tiers_Cmd, la commande IR_Cmd pourra éventuellement être exécutée conformément aux étapes 150 à 152.

Si, à l'inverse, il résulte du test effectué à l'étape 160, que l'exécution de la commande reçue IR_Cmd est prioritaire sur la commande Tiers_Cmd, cette commande Tiers_Cmd est stockée dans la mémoire 44 (étape 180), en attente de l'accomplissement de l'exécution de la commande IR_Cmd. Le contrôleur 43 commande l'émetteur 41 pour qu'il émette (étape 181) une réplique de la commande IR_CMD. La réplique est de préférence transmise au système 3 de gestion tiers, par exemple au boîtier pilote 30, via le module 42 d'interface et/ou stockée dans la mémoire 44 (étape 182). Dès que la commande IR_Cmd ne sera plus jugée incompatible, ou après l'accomplissement de l'exécution de la commande IR_Cmd, la commande Tiers_Cmd pourra éventuellement être exécutée.

Dans tous les cas où une commande a été exécutée, on prévoit de préférence que l'appareil 4 envoie une confirmation de la bonne exécution de cette commande via le module 42 d'interface au système de gestion tiers.

L'exemple de procédé illustré sur la figure 3 part du principe que les commandes reçues du système 3 de gestion tiers sont en général prioritaires par rapport à celles reçues de la télécommande 2 et montre les étapes qui peuvent être mises en oeuvre lors de la réception d'une commande générée par la télécommande.

Néanmoins, ce procédé peut être aisément généralisé au traitement de tout signal de commande reçu, qu'il soit émis par la télécommande 2 ou par le système 3 de gestion tiers, et quelles que soient les règles de compatibilité et/ou de priorités. Ainsi, sans départir du cadre de l'invention, le test 120 peut consister plus généralement à vérifier, sur réception d'une commande quelle qu'elle soit, l'existence de toute exécution en cours ou programmée relative à une commande antérieurement reçue, le test 140 peut consister à vérifier la compatibilité de l'exécution de toute commande reçue avec toute exécution déjà en cours ou programmée, et le test 160 peut consister à vérifier la priorité à donner à l'exécution de toute commande reçue ou à l'exécution déjà en cours ou programmée.

En outre, le procédé illustré sur la figure 3 part du principe qu'à l'issue de l'application du jeu de règles, le signal de commande reçu par l'appareil 4 de gestion de commandes est soit transmis à l'identique à l'équipement électrique 1, soit stocké en vue d'une possible exécution ultérieure. Sans départir du cadre de l'invention, d'autres cas peuvent néanmoins être envisagés où le signal finalement transmis à l'appareil électrique 1 est un signal de commande tiers, issu de l'application du jeu de règles au signal de commande reçu et à l'exécution déjà en cours ou programmée. A titre d'exemple, si un ordre de coupure de consommation électrique est programmé dans les prochaines minutes et si la température dans la pièce est de 24°C, alors une commande de baisse de température à 20°C envoyée par la télécommande, jugée incompatible d'après le jeu de règles, pourra avantageusement être convertie en une commande de baisse de température à 22°C, compatible avec l'exécution programmée.

D'autres améliorations peuvent être apportées à la gestion des commandes. Par exemple, si plusieurs commandes identiques ont été stockées, le contrôleur 43 peut être configuré pour commander la réémission d'un nombre réduit de commandes. Par exemple, dans le cas d'un climatiseur auquel un utilisateur aurait envoyé à répétition une commande de type « baisse de température » incompatible avec une commande Tiers_Cmd en cours, cela permet d'éviter une baisse trop brutale de la température lorsque l'incompatibilité cesse d'exister.

Par ailleurs, l'écran d'affichage 46b, lorsqu'il existe, peut être commandé pour indiquer à l'utilisateur final qu'une commande est déjà en cours.

Le module 47 d'interface série, par exemple de type USB, permet d'utiliser, si besoin est, des périphériques externes (écran, clavier). En même temps, ce module 47 d'interface série peut être utilisé pour rajouter des possibilités de communication filaires ou radio, ou de mises à jour du logiciel et/ou de l'ensemble des règles de compatibilité et/ou de priorité. En variante ou en combinaison, ces mises à jour peuvent également être réalisées via le module 42 d'interface suite à un échange de données avec le système 3 de gestion tiers.

Le module 47 d'interface série et/ou le module 42 d'interface peuvent en outre être reliés à des capteurs environnementaux 32, tels que des capteurs de température, d'hygrométrie, de présence, ou autres. Les données provenant de ces capteurs 32 peuvent être stockées dans la mémoire 44 ou encore communiquées au système 3 de gestion tiers par l'intermédiaire du module 42 d'interface. Ces données peuvent également être employées par le contrôleur 43 comme paramètres du jeu de règles de commande, afin de prendre des décisions de commande de l'équipement électrique 1 en fonction de ces données.

L'autonomie de fonctionnement de l'appareil 4 par rapport au système 3 de gestion tiers, en particulier du boîtier pilote 30, peut être avantageusement renforcée par une capacité de programmation à l'avance des consignes de pilotage des équipements électriques 1, couplées ou non avec les données des capteurs 32. Cette programmation peut soit être effectuée via le système 3 de gestion tiers, soit effectuée directement sur l'appareil 4 grâce au clavier 46c, ou encore via le module 47 d'interface série.

Le clavier 46c peut en outre permettre à l'utilisateur d'imposer une commande de dérogation qui sera interprétée comme une commande prioritaire.

Grâce à l'appareil de gestion de commandes selon l'invention, on peut intégrer facilement tout équipement électrique apte à être commandé par infrarouges dans un système de gestion tiers plus complexe, tout en permettant à l'utilisateur de se servir de la télécommande usuelle livrée avec l'appareil.

La liaison existant entre le système de gestion tiers 3 et l'appareil 4 de gestion est de préférence bi directionnelle de façon à permettre également des remontées d'informations depuis l'appareil 4 vers le système de gestion tiers 3. Ces informations peuvent être de diverses natures, et peuvent servir à différentes utilisations :
En particulier, la mémoire 44 peut conserver un historique de toute commande reçue (en provenance du système 3 de gestion tiers ou de la télécommande 2), de toute commande exécutée, ou de toute commande non exécutée. Cet historique peut être envoyé au système de gestion tiers, soit en temps réel, soit de façon régulière, soit encore sur demande du système tiers. Le système tiers va pouvoir par exemple utiliser ces données pour mieux prévoir les commandes ultérieures qu'il peut envoyer. Dans le cas où le système de gestion tiers est un système de modulation en temps réel, cela peut notamment permettre à ce système de ne pas envoyer un ordre de coupure vers un équipement qui ne serait finalement pas disponible à la coupure, et d'envoyer à la place un ordre de coupure à un autre équipement. Par ailleurs, le système de gestion tiers peut aussi utiliser ces données pour permettre à l'utilisateur de consulter l'historique, via la plateforme centralisée 31.

Dans la description précédente, l'appareil 4 de gestion de commandes a été décrit dans une version complète lui permettant notamment de stocker des données localement grâce à la mémoire 44. D'autres versions peuvent néanmoins être également envisagées où la mémoire serait déportée, par exemple au niveau du système 3 de gestion tiers, sans départir du cadre de l'invention.

## Revendications

1. Appareil (4) de gestion de commandes d'un équipement électrique (1), ledit équipement électrique (1) étant apte à être commandé par des signaux de commande infrarouges (IR_Cmd) issus d'une télécommande (2) à infrarouge associée à l'équipement électrique (1), ledit appareil (4) de gestion de commandes comportant un récepteur (40) à infrarouge, un émetteur (41) à infrarouge et un module (42) d'interface apte à recevoir des signaux de commande (Tiers_Cmd) émis par un système (3) de gestion tiers, ledit appareil (4) de gestion de commandes étant apte à être placé en regard d'un module (10) de réception à infrarouge de l'équipement électrique (1) de façon à recevoir sur le récepteur (40) à infrarouge tout signal de commande infrarouge (IR_Cmd) issu de ladite télécommande (2) et empêcher tout signal de commande infrarouge (IR_Cmd) issu de ladite télécommande (2) à infrarouge d'atteindre directement le module (10) de réception à infrarouge, et comportant un contrôleur (43) apte à commander la transmission vers l'équipement électrique (1), par l'intermédiaire de l'émetteur (41) à infrarouge, de signaux de commande à infrarouge générés à partir des signaux de commande à infrarouge (IR_Cmd) reçus par le récepteur (40) à infrarouge ou des signaux de commande (Tiers_Cmd) reçus par le module (42) d'interface, en fonction d'un ensemble de règles de compatibilité et/ou de priorité relatives à l'exécution des signaux de commande reçus.

2. Appareil (4) de gestion de commandes selon l'une quelconque des revendications précédentes, **caractérisé en ce que** le module (42) d'interface est apte à permettre l'envoi de données vers le système (3) de gestion tiers.

3. Appareil (4) de gestion de commandes selon l'une quelconque des revendications précédentes, **caractérisé en ce que** le module (42) d'interface est apte à permettre des échanges de signaux à courant porteur de type CPL, et/ou radiofréquence, notamment WiFi, et/ou ZigBee, et/ou GPRS/3G/4G.

4. Appareil (4) de gestion de commandes selon l'une quelconque des revendications 1 à 2, **caractérisé en ce que** le module (42) d'interface et le récepteur (40) à infrarouge sont confondus.

5. Appareil (4) de gestion de commandes selon l'une quelconque des revendications précédentes, **caractérisé en ce qu'**il comprend en outre une alimentation de secours.

6. Appareil (4) de gestion de commandes selon l'une quelconque des revendications précédentes, **caractérisé en ce qu'**il comprend en outre des moyens d'interface homme-machine tels qu'un indicateur visuel (46a), et/ou un écran d'affichage (46b), et/ou un clavier (46c) comportant au moins un bouton.

7. Appareil (4) de gestion de commandes selon l'une quelconque des revendications précédentes, **caractérisé en ce qu'**il comprend en outre un module (47) d'interface série de type USB, RS232, Firewire, Thunderbolt, HDMI, KNX, RJ45, RJ12 ou BacNet.

8. Appareil (4) de gestion de commandes selon la revendication 7, **caractérisé en ce que** le contrôleur (43) est en outre apte à mettre à jour l'ensemble de règles de compatibilité et/ou de priorité à partir d'informations de mises à jour reçues par le module (42) d'interface, et/ou par le module (47) d'interface série.

9. Appareil (4) de gestion de commandes selon l'une quelconque des revendications précédentes, **caractérisé en ce qu'**il comporte en outre une mémoire (44) apte à conserver un historique de la mise en oeuvre du jeu de règles, notamment les signaux de commande transmis ou non à l'équipement électrique.

10. Appareil (4) de gestion de commandes selon la revendication 9, **caractérisé en ce que** ladite mémoire (44) stocke en outre toute donnée reçue par l'appareil (4) en provenance du système (3) de gestion tiers et/ou de l'équipement électrique (1) et/ou de la télécommande (2) à infrarouge.

11. Procédé de gestion de commandes d'un équipement électrique (1), ledit équipement électrique (1) étant apte à être commandé par des signaux de commande infrarouges (IR_Cmd) issus d'une télécommande (2) à infrarouge associée à l'équipement électrique (1), le procédé comprenant les étapes suivantes:
- intercepter, au moyen d'un appareil (4) de gestion de commandes comportant un récepteur (40) à infrarouge, tout signal de commande infrarouge (IR_Cmd) issu de ladite télécommande (2) à infrarouge;
- recevoir, sur un module (42) d'interface de l'appareil (4) de gestion de commandes, des signaux de commande (Tiers_Cmd) émis par un système (3) de gestion tiers; et
- transmettre vers l'équipement électrique (1), par l'intermédiaire d'un émetteur (41) à infrarouge de l'appareil (4) de gestion de commandes, des signaux de commande à infrarouge générés à partir des signaux de commande infrarouge (IR_Cmd) reçus par le récepteur (40) à infrarouge ou des signaux de commande (Tiers_Cmd) reçus par le module (42) d'interface, en fonction d'un ensemble de règles de compatibilité et/ou de priorité relatives à l'exécution des signaux de commande reçus.

12. Procédé de gestion de commandes selon la revendication 11, **caractérisé en ce que**, pour tout signal de commande reçu, l'étape de transmission comprend les étapes de:
- vérification (120) de l'existence d'une exécution déjà en cours ou programmée correspondant à un autre signal de commande reçu antérieurement;
- le cas échéant, vérification (140) de la compatibilité d'une exécution de la commande reçue avec une exécution déjà en cours ou programmée correspondant à l'autre signal de commande reçu antérieurement selon ledit ensemble de règles;
- en cas d'incompatibilité, vérification de la priorité (160) à donner à l'exécution de la commande reçue ou à l'exécution déjà en cours ou programmée selon ledit ensemble de règles.

13. Procédé de gestion de commandes selon la revendication 12, **caractérisé en ce que** tout signal de commande reçu alors qu'il n'existe aucune autre exécution en cours ou programmée, ou tout signal de commande reçu dont l'exécution est jugée compatible avec une autre exécution en cours ou programmée, ou tout signal de commande reçu dont l'exécution est jugée incompatible mais prioritaire par rapport à une autre exécution en cours ou programmée est transmis par l'émetteur (41) à infrarouge de l'appareil (4) de gestion de commandes.

14. Procédé de gestion de commandes selon l'une quelconque des revendications 12 ou 13, **caractérisé en ce que** tout signal de commande reçu dont l'exécution est jugée incompatible et non prioritaire par rapport à une autre exécution en cours ou programmée est stocké en vue d'une exécution ultérieure.

15. Utilisation de l'appareil (4) de gestion de commandes selon l'une des revendications 1 à 10 dans un système de gestion de commandes dans lequel le système (3) de gestion tiers est un système de gestion et de modulation en temps réel d'une consommation électrique comprenant un boîtier pilote (30) relié à une plateforme centralisée (31), les signaux de commande (Tiers_Cmd) émis par le système (3) de gestion tiers comprenant notamment des ordres de coupure ou de réduction de consommation de l'équipement électrique (1).

## Patentansprüche

1. Apparat (4) für die Koordination der Steuerung eines elektrischen Geräts (1), wobei das elektrische Gerät (1) imstande ist, von Infrarot-Steuersignalen (IR_Cmd) einer Infrarot-Fernbedienung (2) gesteuert zu werden, die dem elektrischen Gerät (1) zugeordnet ist, wobei der Apparat (4) für die Koordination der Steuerung einen Infrarot-Empfänger (40), einen Infrarot-Sender (41) und ein Schnittstellenmodul (42) aufweist, das imstande ist, von einem Dritt-Koordinationssystem (3) gesendete Steuersignale (Tiers_Cmd) zu empfangen, wobei der Apparat (4) für die Koordination der Steuerung imstande ist, gegenüber einem Infrarot-Empfangsmodul (10) des elektrischen Geräts (1) derart platziert zu sein, dass auf dem Infrarot-Empfänger (40) alle Infrarot-Steuersignale (IR_Cmd) der Fernbedienung (2) empfangen werden und verhindert wird, dass alle Infrarot-Steuersignale (IR_Cmd) der Infrarot-Fernbedienung (2) das Infrarot-Empfangsmodul (10) direkt erreichen, und einen Controller (43) aufweist, der imstande ist, die Übertragung an das elektrische Gerät (1) über den Infrarot-Sender (41) von Infrarot-Steuersignalen zu steuern, die auf der Basis von Infrarot-Steuersignalen (IR_Cmd) erzeugt werden, die der Infrarot-Empfänger (40) empfängt, oder von Steuersignalen (Tiers_Cmd), die das Schnittstellenmodul (42) empfängt, in Abhängigkeit von einer Gruppe von Kompatibilitäts- und/oder Prioritätsregeln, die sich auf die Ausführung der empfangenen Steuersignale beziehen.

2. Apparat (4) für die Koordination der Steuerung nach einem der vorangehenden Ansprüche, **dadurch gekennzeichnet, dass** das Schnittstellenmodul (42) imstande ist, das Senden von Daten an das Dritt-Koordinationssystem (3) zu erlauben.

3. Apparat (4) für die Koordination der Steuerung nach einem der vorangehenden Ansprüche, **dadurch gekennzeichnet, dass** das Schnittstellenmodul (42) imstande ist, den Austausch von Signalen vom Typ CPL und/oder Funkfrequenz, vor allem WLAN, und/oder ZigBee und/oder GPRS/3G/4G zu erlauben.

4. Apparat (4) für die Koordination der Steuerung nach einem der Ansprüche 1 bis 2, **dadurch gekennzeichnet, dass** das Schnittstellenmodul (42) und der Infrarot-Empfänger (40) zusammenfallen.

5. Apparat (4) für die Koordination der Steuerung nach einem der vorangehenden Ansprüche, **dadurch gekennzeichnet, dass** er ferner eine Notversorgung umfasst.

6. Apparat (4) für die Koordination der Steuerung nach einem der vorangehenden Ansprüche, **dadurch gekennzeichnet, dass** er ferner Mensch-Maschine-Schnittstellenmittel wie eine visuelle Anzeige (46a) und/oder einen Anzeigebildschirm (46b) und/oder eine Tastatur (46c) umfasst, die mindestens einen Knopf aufweist.

7. Apparat (4) für die Koordination der Steuerung nach einem der vorangehenden Ansprüche, **dadurch gekennzeichnet, dass** er ferner ein serielles Schnittstellenmodul (47) vom Typ USB, RS232, Firewire, Thunderbolt, HDMI, KNX, RJ45, RJ12 oder BacNet umfasst.

8. Apparat (4) für die Koordination der Steuerung nach Anspruch 7, **dadurch gekennzeichnet, dass** der Controller (43) ferner imstande ist, alle Kompatibilitäts- und/oder Prioritätsregeln auf der Basis von von dem Schnittstellenmodul (42) und/oder von dem seriellen Schnittstellenmodul (47) empfangenen Aktualisierungsinformationen zu aktualisieren.

9. Apparat (4) für die Koordination der Steuerung nach einem der vorangehenden Ansprüche, **dadurch gekennzeichnet, dass** er ferner einen Speicher (44) umfasst, der imstande ist, einen Verlauf der Umsetzung des Regelwerks, vor allem der an das elektrische Gerät übertragenen oder nicht übertragenen Steuersignale, zu speichern.

10. Apparat (4) für die Koordination der Steuerung nach Anspruch 9, **dadurch gekennzeichnet, dass** der Speicher (44) ferner alle vom Apparat (4) von dem Koordinationssystem (3) und/oder von dem elektrischen Gerät (1) und/oder von der Infrarot-Fernsteuerung (2) empfangenen Daten speichert.

11. Verfahren für die Koordination der Steuerung eines elektrischen Geräts (1), wobei das elektrische Gerät (1) imstande ist, von Infrarot-Steuersignalen (IR_Cmd) einer Infrarot-Fernbedienung (2) gesteuert zu werden, die dem elektrischen Gerät (1) zugeordnet ist, wobei das Verfahren die folgenden Schritte umfasst:
- Abfangen, mit Hilfe eines Apparats (4) für die Koordination der Steuerung, umfassend einen Infrarot-Empfänger (40), jedes Infrarot-Steuersignals (IR_Cmd) von der Infrarot-Fernbedienung (2),
- Empfangen, an einem Schnittstellenmodul (42) des Apparats (4) für die Koordination der Steuerung, der von einem Dritt-Koordinationssystem (3) gesendeten Steuersignale (Tiers_Cmd), und
- Übertragen an das elektrische Gerät (1), über einen Infrarot-Sender (41) des Apparats (4) für die Koordination der Steuerung, der auf der Basis der Infrarot-Steuersignale (IR_Cmd) erzeugten, von dem Infrarot-Empfänger (40) empfangenen Infrarot-Steuersignale oder der von dem Schnittstellenmodul (42) empfangenen Steuersignale (Tiers_Cmd) in Abhängigkeit von einer Gruppe von Kompatibilitäts- und/oder Prioritätsregeln, die sich auf die Ausführung der empfangenen Steuersignale beziehen.

12. Verfahren für die Koordination der Steuerung nach Anspruch 11, **dadurch gekennzeichnet, dass** für jedes empfangene Steuersignal der Übertragungsschritt die folgenden Schritte umfasst:
- Überprüfen (120) des Vorhandenseins einer bereits laufenden oder programmierten Ausführung, die einem anderen, zuvor empfangenen Steuersignal entspricht,
- gegebenenfalls Überprüfen (140) der Kompatibilität einer Ausführung der empfangenen Steuerung mit einer bereits laufenden oder programmierten Ausführung, die dem anderen, zuvor empfangenen Steuersignal entspricht, gemäß der Regelgruppe,
- bei Inkompatibilität Überprüfen der Priorität (160), die der Ausführung der empfangenen Steuerung oder der bereits laufenden oder programmierten Ausführung zu geben ist, gemäß der Regelgruppe.

13. Verfahren für die Koordination der Steuerung nach Anspruch 12, **dadurch gekennzeichnet, dass** jedes empfangene Steuersignal, während es keine andere laufende oder programmierte Ausführung gibt, oder jedes empfangene Steuersignal, dessen Ausführung als mit einer anderen laufenden oder programmierten Ausführung kompatibel beurteilt wird, oder jedes empfangene Steuersignal, dessen Ausführung als inkompatibel, aber prioritär in Bezug auf eine andere laufende oder programmierte Ausführung beurteilt wird, vom Infrarot-Sender (41) des Apparats (4) für die Koordination der Steuerung übertragen wird.

14. Verfahren für die Koordination der Steuerung nach einem der Ansprüche 12 oder 13, **dadurch gekennzeichnet, dass** jedes empfangene Steuersignal, dessen Ausführung als inkompatibel und nicht prioritär in Bezug auf eine andere laufende oder programmierte Ausführung beurteilt wird, im Hinblick auf eine spätere Ausführung gespeichert wird.

15. Verwendung des Geräts (4) für die Koordination der Steuerung nach einem der Ansprüche 1 bis 10 in einem System für die Koordination der Steuerung, wobei das Dritt-Koordinationssystem (3) ein Koordinations- und Modulationssystem in Echtzeit eines Stromverbrauchs ist, umfassend einen Steuerkasten (30), der mit einer zentralisierten Plattform (31) verbunden ist, wobei die von dem Dritt-Koordinationssystem (3) gesendeten Steuersignale (Tiers_Cmd) vor allem Befehle zur Unterbrechung oder Reduzierung des Verbrauchs des elektrischen Geräts (1) umfassen.

## Claims

1. An apparatus (4) for managing the control of an electrical device (1), said electrical device (1) being suitable for being controlled by infrared control signals (IR_Cmd) from an infrared remote control (2) associated with the electrical device (1), said control management apparatus (4) including an infrared receiver (40), an infrared transmitter (41) and an interface module (42) able to receive control signals (Tiers_Cmd) sent by a third-party management system (3), said control management apparatus (4) being suitable for being placed opposite an infrared reception module (10) of the electrical device (1) so as to receive, on the infrared receiver (40), any infrared control signal (IR_Cmd) from said remote control (2) and to prevent any infrared control signal (IR_Cmd) from said infrared remote control (2) from directly reaching the infrared reception module (10), and including a controller (43) able to control the transmission to said electrical device (1), via the infrared transmitter (41), of infrared control signals generated from infrared control signals (IR_Cmd) received by the infrared receiver (40) or control signals (Tiers_Cmd) received by the interface module (42), based on a set of compatibility and/or priority rules relative to the execution of the received control signals.

2. The control management apparatus (4) according to any one of the preceding claims, **characterized in that** the interface module (42) is suitable for allowing the sending of data to the third-party management system (3).

3. The control management apparatus (4) according to any one of the preceding claims, **characterized in that** the interface module (42) is able to allow exchanges of powerline communication signals of the PLC and/or radiofrequency, in particular Wi-Fi, and/or ZigBee, and/or GPRS/3G/4G type.

4. The control management apparatus (4) according to any one of claims 1 to 2, **characterized in that** the interface module (42) and the infrared receiver (40) are combined.

5. The control management apparatus (4) according to any one of the preceding claims, **characterized in that** it further comprises a backup power source.

6. The control management apparatus (4) according to any one of the preceding claims, **characterized in that** it further comprises man-machine interface means such as a visual indicator (46a) and/or a display screen (46b) and/or a keypad (46c) including at least one button.

7. The control management apparatus (4) according to any one of the preceding claims, **characterized in that** it further comprises a serial interface module (47) of the USB, RS232, Firewire, Thunderbolt, HDMI, KNX, RJ45, RJ12 or BacNet type.

8. The control management apparatus (4) according to claim 7, **characterized in that** the controller (43) is further suitable for updating the set of compatibility and/or priority rules from update information received by the interface module (42) and/or by the serial interface module (47).

9. The control management apparatus (4) according to any one of the preceding claims, **characterized in that** it further includes a memory (44) able to keep a history of the implementation of the set of rules, in particular the control signals sent or not sent to the electrical device.

10. The control management apparatus (4) according to claim 9, **characterized in that** said memory (44) further stores any data received by the apparatus (4) coming from the third-party management system (3) and/or the electrical equipment (1) and/or the infrared remote control (2).

11. A method for managing the control of an electrical device (1), said electrical device (1) being able to be controlled by infrared control signals (IR_Cmd) coming from an infrared remote control (2) associated with the electrical device (1), the method comprising the following steps:
- intercepting, using a control management apparatus (4) including an infrared receiver (40), any infrared control signal (IR_Cmd) coming from said infrared remote control (2);
- receiving, on an interface module (42) of the control management apparatus (4), control signals (Tiers_Cmd) sent by a third-party management system (3); and
- sending, to the electrical device (1) via an infrared transmitter (41) of the control management apparatus (4), infrared control signals generated from infrared control signals (IR_Cmd) received by the infrared receiver (40) or control signals (Tiers_Cmd) received by the interface module (42), based on a set of compatibility and/or priority rules relative to the execution of the received control signals.

12. The control management method according to claim 11, **characterized in that**, for any received control signal, the transmission step comprises the following steps:
- verifying (120) the existence of an in progress or scheduled execution corresponding to another control signal previously received;
- if applicable, verifying (140) the compatibility of an execution of the received command with an in progress or scheduled execution corresponding to the other control signal received previously according to said set of rules;
- in case of incompatibility, verifying the priority (160) to be given to the execution of the received command or the execution already in progress or scheduled according to said set of rules.

13. The control management method according to claim 12, **characterized in that** any control signal received whereas no other in progress or scheduled execution exists, or any received control signal whose execution is deemed compatible with another in progress or scheduled execution, or any received control signal whose execution is deemed incompatible but to take priority relative to another in progress or scheduled execution is sent by the infrared transmitter (41) of the control management apparatus (4).

14. The control management method according to any one of claims 12 or 13, **characterized in that** any received control signal whose execution is deemed incompatible and not to have priority relative to another in progress or scheduled execution is stored for later execution.

15. A use of the control management apparatus (4) according to one of claims 1 to 10 in a control management system in which the third-party management system (3) is a management and real-time modulation system for electrical consumption comprising a control unit (30) connected to a centralized platform (31), the control signals (Tiers_Cmd) sent by the third-party management system (3) in particular comprising orders to cut or reduce consumption by the electrical device (1).
